Europäisches Patentamt

European Patent Office

Office européen des brevets

(19)

(11) Veröffentlichungsnummer: **0 599 281 A2**

## (12) EUROPÄISCHE PATENTANMELDUNG

(21) Anmeldenummer: **93118870.0**

(22) Anmeldetag: **24.11.93**

(51) Int. Cl.5: **B01D 61/02**, C02F 1/44, B01D 61/12

(30) Priorität: **27.11.92 DE 4239867**

(43) Veröffentlichungstag der Anmeldung:
**01.06.94 Patentblatt 94/22**

(84) Benannte Vertragsstaaten:
**AT BE CH DE ES FR GB IT LI NL**

(71) Anmelder: **WAT WASSER- UND UMWELTTECHNIK GmbH**
**Kleinwallstadter Strasse 10**
**D-63834 Sulzbach-Dornau(DE)**

(72) Erfinder: **Hohlweck, Werner**
**Kleinwallstadter Strasse 10**
**D-63834 Sulzbach-Dornau(DE)**

(74) Vertreter: **Flosdorff, Jürgen, Dr.**
**Alleestrasse 33**
**D-82467 Garmisch-Partenkirchen (DE)**

(54) **Verfahren und Vorrichtung zur Aufbereitung von Flüssigkeiten nach dem Prinzip der Umkehrosmose.**

(57) Bei dem Umkehrosmosegerät ist eine kontinuierliche, fernsteuerbare Einstellung und in weiterer Ausgestaltung eine selbsttätige Regelung der Konzentrat-Rezirkulation in Abhängigkeit von Analysewerten vorgesehen, vorzugsweise mit periodisch geschalteten Ventilen bei veränderlichem Verhältnis der Öffnungszeiten. Diese Maßnahmen dienen der Optmierung der Ausbeute und der Schonung des Membranmoduls. In weiterer Ausgestaltung erfolgt auch die Regelung der Permeat-Rezirkulation nach dem gleichen Prinzip. Darüberhinaus ist für die Vorrichtung ein Verteilergefäß vorgesehen, das dem Druck- und Konzentrationsausgleich sowie als Rücklaufsperre für den Wasserzulauf dient und mehrere Kontroll- und Überwachungsfunktionen in sich vereinigt.

Schema Osmose
Fig. Nr 1

EP 0 599 281 A2

Die Erfindung betrifft ein Verfahren zur Aufbereitung von Flüssigkeiten nach dem Prinzip der umgekehrten Osmose, insbesondere zur Gewinnung von im wesentlichen reinem Wasser aus Leitungswasser, Brackwasser oder Salzwasser mittels einer ein Membranmodul aufweisenden Vorrichtung.

Außerdem betrifft die Erfindung eine derartige Vorrichtung, bei der dem Membranmodul ein Verteilergefäß vorgeordnet ist, in welches außer einer Frischwasser-Zuführleitung eine Konzentrat-Rückführleitung und eine Permeat-Rückführleitung einmündet. Nach einem zusätzlichen Aspekt der vorliegenden Erfindung ist das Verteilergefäß mit einer Einrichtung zur Verhinderung eines Rückflusses seines Inhalts zur Frischwasserseite hin versehen, wobei das Verteilergefäß als Ganzes und die besondere Einrichtung zur Rückflußverhinderung auch in anderen Vorrichtungen wie z.B. Wasserzuführungs- und Verteilungssystemen anwendbar sind.

Vorrichtungen der betrachteten Art, die auch als Umkehrosmosegeräte oder -anlagen bezeichnet werden, dienen hauptsächlich dazu, unter Ausnutzung der Trenneigenschaften einer semipermeablen Membran eine Lösung in mindestens zwei Teil-Lösungen zu trennen, von denen eine eine erhöhte Konzentration der gelösten Bestandteile und eine andere eine verminderte Konzentration der gelösten Bestandteile aufweist. Wichtige Anwendungen sind die Wasserreinigung und die Aufbereitung von Abwässern. Im Folgenden wird die Erfindung im Zusammenhang mit einer bevorzugten Anwendung beschrieben, und zwar in Form eines Umkehrosmosegerätes zur Gewinnung von reinem Wasser aus Leitungswasser. Solche Geräte werden z.B. in Verbindung mit Hämodialysegeräten benötigt, um zur Herstellung der Dialysierflüssigkeit ausreichend reines, möglichst keimfreies Wasser zur Verfügung zu haben. Unbehandeltes Leitungswasser ist hingegen für diesen Zweck wegen seines Gehaltes an gelösten Salzen und sonstigen Verunreinigungen meist nicht geeignet.

Es wird jedoch ausdrücklich darauf hingewiesen, daß die Erfindung nicht auf dieses spezielle Einsatzgebiet beschränkt ist.

Das Funktionsprinzip von Umkehrosmosegeräten besteht darin, daß das aufzubereitende Rohwasser in einem sogenannten Membranmodul unter hohem Druck an der Oberfläche einer semipermeablen Membran entlanggeführt wird, wobei ein Teil des Wassers durch die Membran tritt und auf der anderen Seite der Membran als sogenanntes Permeat gesammelt und abgeführt wird. Entsprechend den Durchlässigkeitseigenschaften der Membran ist die Salzkonzentration des Permeats, das das nutzbare Reinwasser darstellt, geringer als die des Rohwassers. Der nicht durch die Membran tretende Teil des Rohwassers, der an der anderen Seite des Membranmoduls ausfließt, weist dagegen eine gegenüber dem Rohwasser erhöhte Konzentration auf und wird daher auch als Konzentrat bezeichnet.

Bei der Gestaltung und im praktischen Einsatz von Umkehrosmosegeräten ist man bestrebt, einen annehmbaren Kompromiß zwischen den folgenden Anforderungen zu erhalten:

a) ausreichende Reinwasserqualität,

b) hohe Ausbeute (geringer Rohwasserbedarf),

c) hohe Gerätelebensdauer.

Die Aufrechterhaltung eines optimalen Betriebes wird unter anderem dadurch erschwert, daß die Salzkonzentration des Rohwassers im allgemeinen zeitlich nicht konstant ist, sondern sich manchmal in weiten Grenzen verändert. Ebenso kann der Reinwasserbedarf erheblich schwanken. Außer einer richtigen Dimensionierung der Teile des Gerätes sind daher Einrichtungen zur Einstellung und Regelung notwendig, mit denen eine Anpassung an die jeweiligen Betriebsbedingungen möglich ist. Dabei müssen jedoch Betriebszustände vermieden werden, die zu Schäden an Teilen des Gerätes führen würden. Besonders empfindlich in dieser Hinsicht ist das Membranmodul. Unter ungeeigneten Betriebsbedingungen kommt es in kurzer Zeit zu einer Degeneration der Membran, einer Art Verstopfung, durch die die Durchlässigkeit der Membran erheblich vermindert wird. Aber auch unter normalen Bedingungen ist eine allmähliche Verschlechterung (Alterung) der Membraneigenschaften kaum zu vermeiden. Hierauf muß bei der Einstellung und Regelung Rücksicht genommen werden.

Zur quantitativen Beschreibung der Vorgänge in einem Umkehrosmosegerät werden folgende Abkürzungen definiert:

Zu- und Abflüsse, Durchflüsse (Volumen pro Zeiteinheit):

| | | |
|---|---|---|
| $Q_r$ | = | Rohwasserzufluß |
| $Q_k$ | = | Gesamt-Konzentratfluß |
| $Q_{ka}$ | = | Konzentrat-Abfluß |
| $Q_{kr}$ | = | Konzentrat-Rezirkulationsfluß |
| $Q_p$ | = | Gesamt-Permeat |
| $Q_{pa}$ | = | Permeat-Abfluß |

2

Qpr = Permeat-Rezirkulation

Konzentrationen:

Cr = Konzentration im Rohwasser
Cv = Konzentration im Verteilergefäß
Ck = Konzentration im Konzentrat
C1 = mittlere Konzentration auf der Konzentratseite der Membran

$$C1 = (Cv + Ck)/2$$

Cp = Konzentrat im Permeat

Leistungsgrößen:

Am = Ausbeute des Moduls = $Qp/(Qr + Qkr + Qpr)$
Ag = Ausbeute des gesamten Gerätes = $Qpa/Qr = (Qp-Qpr)/Qr$
E = Rückhaltekoeffizient des Moduls = $C1/(C1 + Cp)$

Am und E sind Geräteeigenschaften, die bei vorgegebener Druckdifferenz zwischen Konzentrat- und Permeatseite des Moduls im wesentlichen von der effektiven Membranfläche und den Durchlässigkeitseigenschaftender Membran bestimmt werden.

Die Größe Am ist erheblich vom Alterungszustand des Membranmoduls abhängig. Ursache hierfür ist die Anlagerung unlöslicher Stoffe in den Poren der Membran und auf der Membranoberfläche. Man spricht von einer Verdichtung der Membran, die die Ausbeute des Moduls mehr oder weniger reduziert, was quasi einer Verminderung der effektiven Membranfläche gleichkommt. Diese Leistungsminderung tritt normalerweise in den ersten tausend Betriebsstunden am stärksten auf. Nach dieser ersten Betriebszeit tritt eine weitere langsame stetige Leistungsminderung ein, so daß schließlich ein Auswechseln des Moduls nicht zu vermeiden ist. Wegen der hohen Kosten, die dies verursacht, ist man bestrebt, Betriebsbedingungen zu schaffen, die die Membran schonen und die Alterung möglichst verlangsamen.

Gleichzeitig soll die Ausbeute des Umkehrosmosegerätes, dargestellt durch die Größe Ag = $Qpa/Qr$, möglichst hoch sein, d.h. bei vorgegebenen Qualitätsanforderungen an das Reinwasser soll ein bestimmter Reinwasserabfluß Qpa mit möglichst geringem Rohwasserzufluß Qr erreicht werden, um Rohwasser zu sparen.

Es ist vorgeschlagen worden, einen Teil des Permeats und des Konzentrats zurückzuführen und dem Rohwasser hinzuzufügen (zu rezirkulieren). Dabei ist eine Rezirkulation eines Teiles des Permeats insbesondere dann sinnvoll, wenn der aktuelle Reinwasserbedarf geringer ist als die erzeugte Reinwassermenge. Eine solche Rezirkulation kann sich von selbst ergeben, wenn der Permeatabfluß Qpa geringer ist als der Gesamt-Permeatabfluß Qp. Diese Permeat-Rezirkulation führt zu einer Absenkung der Salzkonzentration des Wassers stromaufwärts des Membranmoduls auf den Betrag

$$Cv = (Qr \times Cr + Qpr \times Cp)/(Qr + Qpr),$$

und dies wiederum hat eine Verminderung der Salzkonzentration im Permeat zur Folge. Mit vermindertem Permeatabfluß erhöht sich also die Reinwasserqualität.

Für die Erfindung wesentlich ist die Rezirkulation des Konzentrats. Ohne Permeatrezirkulation ergibt sich als Folge der Konzentratrezirkulation analog zu der obigen Beziehung stromaufwärts des Membramoduls die Konzentration

$$Cv = (Qr \times Cr + Qkr \times Ck)/(Qr + Qkr).$$

Die durch die Konzentratrezirkulation eintretende Erhöhung der Konzentration am Moduleingang könnte wegen der damit verbundenen Erhöhung der Konzentration im Permeat als nachteilig erscheinen, jedoch wird mit der Konzentratrezirkulation eine Erhöhung der Ausbeute Ag erreicht. Dies ist dann nutzbar, wenn die Salzkonzentration in produziertem Reinwasser noch mehr oder weniger weit unterhalb einer vorgegebenen Grenze liegt, wofür verschiedene Gründe einzeln oder in Verbindung miteinander in Betracht kommen:
- niedrige Salzkonzentration im Rohwasser,
- hoher Rückhaltekoeffizient der Membran,

- hohe Permeatrezirkulation bedingt durch niedrigen Reinwasserbedarf und/oder hohe Ausbeute Am des Membranmoduls.

Durch eine Steigerung der Konzentratrezirkulation kann also die Ausbeute Ag gesteigert werden, bis die Salzkonzentration im abfließenden Permeat einen als zulässig angesehenen Grenzwert erreicht.

Es ist bereits bekannt, das aus dem Membranmodul austretende Konzentrat mittels eingebauter Strömungswiderstände in die Konzentratabflußleitung und eine Konzentratrezirkulationsleitung in einer festen Relation zueinander aufzuteilen. Der Einbau und die feste Einstellung der Strömungswiderstände erfordern besondere Sachkenntnis und geeignete Hilfsmittel und erfolgt bei der ersten Inbetriebnahme des Gerätes unter Berücksichtigung der oben genannten Einflußgrößen so, daß ein akzeptabler Kompromiß zwischen Reinwasserqualität und Ausbeute erzielt wird. Das Gerät arbeitet dann in einem Zustand, bei dem stets ein fester Anteil des Konzentrats rezirkuliert wird.

Da sich die Voraussetzungen, unter denen diese anfängliche Einstellung vorgenommen wurde, wesentlich verändern können, ist auf diese Weise jedoch kein gleichbleibend optimaler Betrieb gewährleistet. Wenn z.B. mit Rücksicht auf eine relativ hohe Konzentratrezirkulation eingestellt wurde, kann eine der folgenden Ursachen (oder eine Kombination davon) dazu führen, daß nicht nur die Salzkonzentration im Permeat unzulässig ansteigt, sondern auch die Konzentration auf der Rohwasserseite (Konzentratseite) der Membran so hohe Werte erreicht, daß es zur Ausfällung gelöster Stoffe und damit zu einer raschen Verstopfung der Membran kommt:

- hohe Salzkonzentration im Rohwasser,
- hoher Reinwasserbedarf (und somit minimale Permeatrezirkulation),
- niedrige Ausbeute des Moduls (Verschlechterung der Qualität).

Eine schon fortgeschrittene Alterung des Moduls, die in einer niedrigeren Ausbeute des Moduls zum Ausdruck kommt, kann also unter diesen Umständen erheblich beschleunigt werden, so daß das Membranmodul in kurzer Zeit unbrauchbar wird.

Wenn andererseits vorsichtshalber keine oder nur eine niedrige Konzentrationrezirkulation eingestellt wird, ist die Ausbeute vermindert, und das Gerät arbeit mit unnötig hohem Rohwasserverbrauch.

Der Erfindung liegt die Aufgabe zugrunde, ein Verfahren zur Aufbereitung von Flüssigkeiten, insbesondere zur Gewinnung von im wesentlichen reinem Wasser aus Leitungswasser anzugeben, welches die oben angegebenen Anforderungen erfüllt. Außerdem soll ein Umkehrosmosegerät angegeben werden, bei dem die effektiven Permeat- und Konzentratdurchflüsse optimal einstellbar und/oder regelbar sind.

Diese Aufgaben werden erfindungsgemäß durch die im Kennzeichen der Patentansprüche 1 und 6 angegebenen Merkmale gelöst. Zweckmäßige Weiterbildungen der Erfindung sind in den abhängigen Ansprüchen gekennzeichnet.

Die vorliegende Erfindung sieht eine Einstellmöglichkeit für die Konzentratrezirkulation und/oder Permeatrezirkulation in einer Weise vor, daß sie auch von ungeschulten Personen ohne den Gebrauch von besonderen Hilfsmitteln handhabbar ist, um die Rezirkulation nach Bedarf jederzeit geänderten Betriebsbedingungen anpassen zu können. Hierzu ist bei der erfindungsgemäßen Vorrichtung insbesondere vorgesehen, daß in der Konzentrat-Abführleitung und der Konzentrat-Rezirkulationsleitung Ventile angeordnet sind, die in der Weise gegenläufig betätigbar sind, daß beim Betätigen des einen Ventils in vorbestimmter Weise der Durchfluß zunimmt, während der Durchfluß durch das andere Ventil in entsprechender Weise abnimmt, wobei in vorteilhafter Ausgestaltung ferner vorgesehen ist, daß der Benutzer anhand einer Skala oder einer vergleichbaren Anzeigevorrichtung den aktuell eingestellten Rezirkulationsanteil erkennen kann.

Die wichtigsten Hinweise für die Notwendigkeit einer Korrektur der Rezirkulationseinstellung liefert eine fortlaufende oder in regelmäßigen Zeitabständen durchgeführte Analyse des Permeats und/oder des Rohwasser und/oder der Flüssigkeit in einem dem Membranmodul vorgeschalteten Verteilerbehälter. Diese Analyse kann auch einfachheitshalber durch eine Messung der elektrischen Leitfähigkeit mit Hilfe einer Leitfähigkeitsmeßzelle ersetzt werde. Erfindungsgemäß ist hierbei die Verwendung eines Leitfähigkeitsmessers mit einer Grenzwert-Meldeeinrichtung vorgesehen, durch die der Benutzer aufmerksam gemacht und zu einer eventuell notwendigen Korrektur der Einstellung der Konzentratrezirkulation veranlaßt wird, wenn die Leitfähigkeit einen Maximalwert überschreitet oder einen Minimalwert unterschreitet.

In einer bevorzugte Ausführungsform der erfindungsgemäßen Vorrichtung sind die beiden gegenläufig betätigbaren Ventile zeitabhängig gesteuerte, elektromagnetische Ventile, die im geöffneten Zustand konstante, vorzugsweise gleiche Strömungswiderstände aufweisen und so betrieben werden, daß durch Veränderung ihrer Ein- und Ausschaltzeiten im zeitlichen Mittel eine definierte Aufteilung des Gesamtkonzentratflusses in die beiden Teilflüsse, nämlich Konzentrat-Rezirkulationsfluß und Konzentrat-Abfluß erfolgt.

Zur Steuerung der beiden Ventile ist erfindungsgemäß eine Steuerungseinrichtung vorgesehen. Diese arbeitet so, daß in einem bestimmten Zeittakt abwechselnd eines der Ventile geöffnet und jeweils das andere Ventil geschlossen wird. Das an der Steuerungseinrichtung von Hand einstellbare Verhältnis der beiden Konzentrat-Teilflüsse entspricht dann dem Verhältnis der Öffnungszeiten der beiden Ventile. Die Steuereinrichtung weist in weiterer Ausgestaltung eine Anzeigevorrichtung auf, an der das aktuell eingestellte Verhältnis der Ventilöffnungszeiten ablesbar ist, welches dem Verhältnis der Teilflüsse entspricht und zugleich ein indirektes Maß für die Ausbeute darstellt.

Die Ausbeute bzw. das Verhältnis des Konzentrat-Rezirkulationsflusses Qkr zum Konzentrat-Gesamtfluß Qk kann direkt in Prozent angezeigt werden. Bei bekanntem Konzentrat-Gesamtfluß Qk können die Teilflüsse Qkr und Qka direkt in einer geeigneten Maßeinheit angezeigt werden.

Erfindungsgemäß wird ferner vorgeschlagen, die minimale Ausbeute durch die Grundeinstellung der Teilflüsse Qpa und Qka festzulegen. Durch den Zeittakt der beiden Ventile kann die Ausbeute von diesem Minimalwert direkt anzeigend bis zur maximalen Größe manuell oder automatisch eingestellt werden.

Es kann hierbei zweckmäßig sein, den Einstellbereich der Ausbeute bzw. der Konzentrat-Rückführung so zu begrenzen, daß dem Benutzer ein vorwählbarer Teilbereich zur Verfügung steht, um eine wesentliche grob fehlerhafte Einstellung zu vermeiden.

Die erfindungsgemäße Steuerungeinrichtung zeichnet sich ferner dadurch aus, daß sie mit einer Fernüberwachungs- und Fernsteuerungseinrichtung versehen sein kann.

Ein wichtiger Vorteil des periodischen Schaltens der Ventile besteht darin, daß ein pulsierender Konzentrat-Rückfluß entsteht, wobei an der Konzentratseite der Membran während der Öffnungszeiten des Ventils der Konzentrat-Rezirkulationsleitung eine hohe Strömungsgeschwindigkeit auftritt. Damit wird durch Scherkräfte ein vorteilhafter mechanischer Reinigungseffekt erzielt, mit dem Ablagerungen auf der Membran, z.B. von biologischem Material und Mikroorganismen (sogenannter Biofilm), abgebaut werden.

Die Pulsation und die damit einhergehende Erhöhung der Strömungsgeschwindigkeit des Konzentratrückflusses bzw. des Permeatrückflusses dient jedoch nicht ausschließlich dem Abbau des biologischen Belages auf der Membran, sondern wirkt auch dem Polarisationseffekt entgegen.

Schematisch läßt sich der Polarisationseffekt wie folgt erklären:

Über die Membran werden $H_2O$-Moleküle von der Konzentrat- in die Permeatseite abgedrängt. Dies führt zu einem Konzentrationsanstieg auf der Konzentratseite der Membran. Diese hochkonzentrierte Grenzschicht bewirkt eine Wechselwirkung zwischen Permeat und Konzentrat in der Form, daß bereits filtriertes Permeat aufgrund des Konzentrationsgefälles rückfiltriert wird, um diese hochkonzentrierte Grenzschicht zu verdünnen. Die Polarisation dieser Grenzschicht ist um so geringer, je dünner sie ist. Die Dicke der Grenzschicht läßt sich physikalisch durch hohe Strömungsgeschwindigkeiten z.B. durch einen pulsatilen Rückfluß auf der Konzentratseite bewirken. Ebenso ist es möglich, die Dicke der Grenzschicht durch den Permeatrückfluß (Verdünnungseffekt) zu beeinflussen.

In weiterer Ausgestaltung der Erfindung kann das Prinzip der pulsierenden Rückführung auch auf die Permeatrezirkulation ausgedehnt werden, und zwar derart, daß dann, wenn die Reinwasserentnahme am Permeatanschluß geringer ist als die vom Membranmodul gelieferte Reinwassermenge, ein zusätzlich in die Permeatrückführungsleitung eingefügtes Magnetventil im Wechsel mit dem Permeatentnahmeventil periodisch geöffnet wird. Das Verhältnis der Öffnungszeiten dieser beiden Ventile ist dann maßgebend für das Verhältnis der zeitlichen Mittelwerte der beiden Permeat-Teilflüsse, nämlich Permeat-Abfluß und Permeat-Rezirkulationsfluß.

Zur selbsttätigen Anpassung des Verhältnisses der beiden Permeat-Teilflüsse ist eine Einrichtung zur Regelung des Verhältnisses der Öffnungszeiten der beiden Ventile in Abhängigkeit vom Permeatdruck geeignet, der mittels Drucksensoren erfaßt wird, die in der Permatleitung vor der Abzweigung der Permeat-Rezirkulationsleitung sowie zwischen dieser und dem Permeatanschluß angeordnet sein sollten. Diese Regelung wirkt in der Weise, daß ein Absinken des Druckes in der zum Verbraucher führenden Permeatleitung die relative Öffnungsdauer des Auslaßventils erhöht, während umgekehrt ein Anstieg dieses Druckes die relative Öffnungsdauer dieses Ventils vermindert.

Ein weiterer Regelmechanismus, der als Funktion des Permeatverbrauches eingesetzt werden kann, ist die Drehzahlregelung der Förderpumpe mittels Elektromotor. Das bedeutet, daß bei geringerem Permeatverbrauch die Gesamtanlage weniger fördert.

Die durch den Elektromotor erzeugte Wärme kann mittels Luft an einer Kühler-ähnlichen Vorrichtung vorbeigeführt werden. Das zufließende Rohwasser wird im Kühler aufgewärmt. Dies führt erfindungsgemäß zu einer Verbesserung des Wirkungsgrades.

Vorteilhafterweise wird das periodische Schalten der beiden Konzentrat-Ventile mit dem periodischen Schalten der beiden Permeat-Ventile synchronisiert, und zwar so, daß sich die Öffnungszeiten des in der Permeat-Rezirkulationsleitung befindlichen Ventils und des in der Konzentrat-Rezirkulationsleitung befindlichen Ventils überdecken. Dies führt zu einer weiteren Erhöhung der Strömungsgeschwindigkeit an der Membranoberfläche in der Öffnungszeit dieser beiden Ventile und somit zu einer Verstärkung der mechanischen Reinigungswirkung. Zugleich wird hiermit einem kurzzeitig zu hohem Anstieg der Konzentration im Primärraum des Membranmoduls entgegengewirkt.

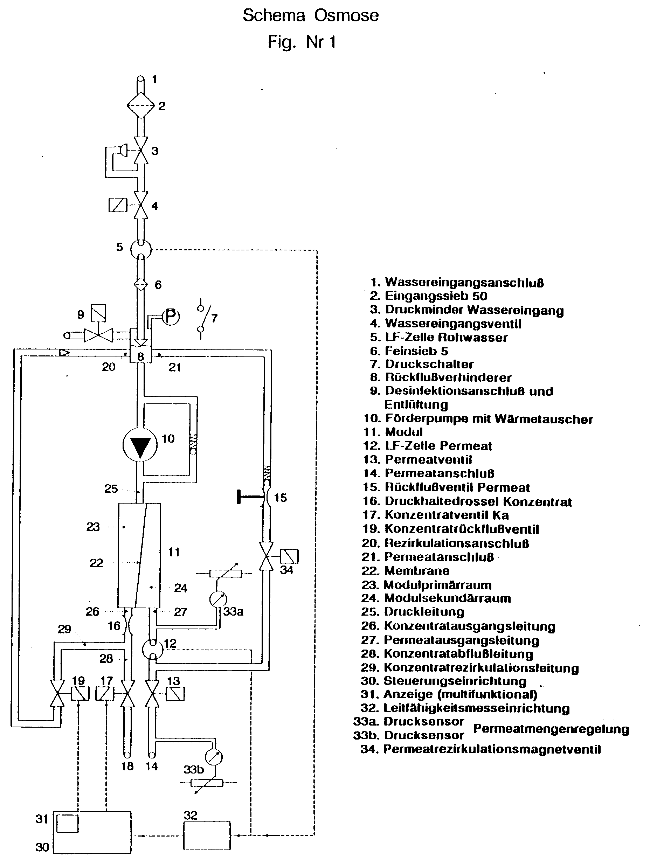

In weiterer Ausgestaltung sieht die Erfindung eine selbsttätige Regelung des Verhältnisses der Konzentrat-Teilflüsse in Abhängigkeit von Analysewerten vor, die mit entsprechenden Sensoren kontinuierlich oder in gewissen Zeitabständen erfaßt werden. Unter Analysewerten werden in diesem Zusammenhang Meßwerte verstanden, die die Konzentrationen bestimmter gelöster Stoffe, Ionen, Härtebildner oder dergleichen repräsentieren. Das weiter unten im Zusammenhang mit Figur 1 beschriebene Ausführungsbeispiel der Erfindung bezieht sich auf eine Regelung der Konzentratrezirkulation in Abhängigkeit von der elektrischen Leitfähigkeit des Permeats mit dem Ziel, die Permeatleitfähigkeit innerhalb vorgegebener Grenzen zumindest annähernd konstant zu halten. Damit wird eine selbsttätige Maximierung der Ausbeute erreicht, d.h. es wird ein Permeat von gleichbleibender, ausreichend geringer Salzkonzentration mit dem kleinstmöglichen Rohwasserverbrauch gewonnen. Zu diesem Zweck ist die Leitfähigkeitsmeßzelle in der Permeatauslaßleitung mit einem Leitfähigkeitsmesser verbunden, der seinerseits mit einer Regeleinrichtung in Verbindung steht. Die Regeleinrichtung arbeitet dabei so, daß bei einem Anstieg der Salzkonzentration im Permeat, entsprechend einem Anstieg der gemessenen Leitfähigkeit, die Öffnungsdauer des in der Konzentrat-Rezirkulationsleitung angeordneten Ventils im Verhältnis zur Öffnungsdauer des in der Konzentrat-Abführleitung befindlichen Ventils vermindert wird. Bei einem Absinken der Salzkonzentration im Permeat erfolgt eine entgegengesetzte Veränderung der Öffnungsdauer der genannten Ventile.

Alternativ oder zusätzlich kann eine Regelung des Verhältnisses der Konzentrat-Teilflüsse in Abhängigkeit von der Salzkonzentration des Konzentrates und/oder von der in dem dem Membranmodul vorgeschalteten Verteilergefäß herrschenden Salzkonzentration vorgesehen werden, um einen modulschonenden Betrieb zu gewährleisten. Diese Regelung hat die Aufgabe, einen übermäßigen Anstieg der Salzkonzentration auf der Konzentratseite der Membran zu verhindern, also Betriebszustände zu vermeiden, in denen eine erhöhte Gefahr des Verstopfens der Membran besteht. Sobald die gemessene Konzentration einen voreingestellten Grenzwert überschreitet, wird zu diesem Zweck die Konzentratrückführung vermindert, indem die Öffnungsdauer des in der Konzentrat-Rezirkulationsleitung befindlichen Ventils im Verhältnis zur Öffnungsdauer des in der Konzentrat-Abführleitung angeordneten Ventils vermindert wird. Dieser Regelfunktion wird vorzugsweise eine übergeordnete funktionale Priorität gegen der oben beschriebenen Regelung auf konstante Salzkonzentration im Permeat zugeordnet.

Die Erfindung betrifft außerdem ein Verteilergefäß, welches sich den oben beschriebenen Funktionen hervorragend anpaßt, jedoch auch in anderen Leitungssystemen verwendbar ist, wie bereits eingangs erwähnt ist.

Anstelle einer einfachen Leitungsverzweigung, die für das Zusammenführung von Reinwasserzufluß, Konzentrat- und Permeatrückfluß benutzt werden könnte, bietet das erfindungsgemäße Verteilergefäß wesentliche Vorteile, zumal sie mehrere Funktionen in sich vereinigt, nämlich:

a) Bildung eines Flüssigkeits-Puffervolumens zur Verminderung von Konzentrations-Schwankungen,
b) Bildung eines (elastischen) Luft-Puffervolumenes zur Verminderung von Druckschwankungen,
c) Rücklaufsperre,
d) Einbau-/Anschlußmöglichkeiten von Sensoren (Füllstand, Druck, Leitfähigkeit),
e) Anschlußstelle für Probeentnahme und/oder Zufuhr von Zusatzstoffen (z.B. Entkalkungsmittel, Desinfektionsmittel).

Die Rücklaufsperre ist vorteilhafterweise folgendermaßen ausgestaltet: die Leitung für den Wasserzulauf endet an der Innenseite eines Deckels in einem Rohrstück, welches am Ende verschlossen ist, aber mindestens eine seitliche Öffnung aufweist. Über das Rohrstück ist ein elastischer Schlauch (z.B. aus Silikongummi) geschoben, der durch seine Vorspannung die seitliche(n) Öffnung(en) verschließt. Nur bei einer ausreichenden Druckdifferenz zwischen dem Wasserzulauf und dem Inneren des luftdichten Gefäßes wird die Rückstellkraft des elastischen Schlauches überwunden, so daß das Wasser durch das offene Ende des Schlauches in das Gefäß eintreten kann.

Die eintretende Flüssigkeit komprimiert die in dem Gefäß befindliche Luft, wobei sich in Abhängigkeit von dem in dem Gefäß herrschenden Druck ein bestimmter Flüssigkeitsspiegel einstellt. Bei geeigneter Abstimmung von Gefäßvolumen, Luft-Füllmenge und Druck-Schwankungsbereich liegt der Flüssigkeitsspiegel stets genügend tief, so daß eine Trennstrecke zwischen dem Wasserzulauf und der im Gerät zirkulierenden Flüssigkeit besteht. Fällt die Wasserzufuhr aus, so verschließt der Schlauch aufgrund seiner Rückstellkraft die seitlichen Öffnungen des Rohres und verhindert dadurch unter allen Umständen einen Rückfluß von Flüssigkeit aus dem Gefäß in die Versorgungsleitung.

Gegenüber einem Rückschlagventil üblicher Bauart mit einem verschiebbar gelagerten Ventilteller oder -kegel, der unter dem Druck einer Feder eine gegenüberliegende Öffnung verschließt, hat die beschriebene Anordnung den Vorteil, daß ein Ausfall durch Korrosion oder Federbruch kaum in Betracht kommt. Der elastische Schlauch bildet ein großflächiges, in sich elastisches Dichtelement von großer Funktionssicherheit.

Ein in das Verteilergefäß eingebauter oder mit ihm verbundener Drucksensor bietet neben der unmittelbaren Messung und Überwachung des Druckes die Möglichkeit einer Funktionskontrolle der Rücklaufsperre und die Möglichkeit einer Messung des in dem Gefäß eingeschlossenen Luftvolumens.

Das flüssigkeits- und luftdichte Verteilergefäß hat gegenüber Rücklaufsperren mit nach außen offener freier Einlaufstrecke den Vorteil, daß eine Funktionsstörung nicht zu einem Austritt von Flüssigkeit in die Umgebung führen kann. Durch eine Überwachung des Druckes im Verteilergefäß, verbunden mit einer automatischen Sperrung des vorgeschalteten Magnetventiles in der Rohwasser-Zuführungsleitung bei Erreichen von Druckwerten, die außerhalb eines zulässigen Arbeitsbereiches liegen, ist eine zusätzliche Absicherung gegeben. Auch eine Beschädigung der dem Verteilergefäß nachgeordneten Pumpe, wie sie bei herkömmlichen Systemen infolge Wassermangels (durch Trockenlauf) auftreten kann, ist durch die Überwachung des Druckes im Verteilergefäß vermeidbar, indem der Antrieb der Pumpe ausgeschaltet wird, wenn der Druck unzulässige Werte erreicht.

In weiterer Ausgetaltung der Erfindung ist der Einbau eines Leitfähigkeitsssensors in das Verteilergefäß vorgesehen.

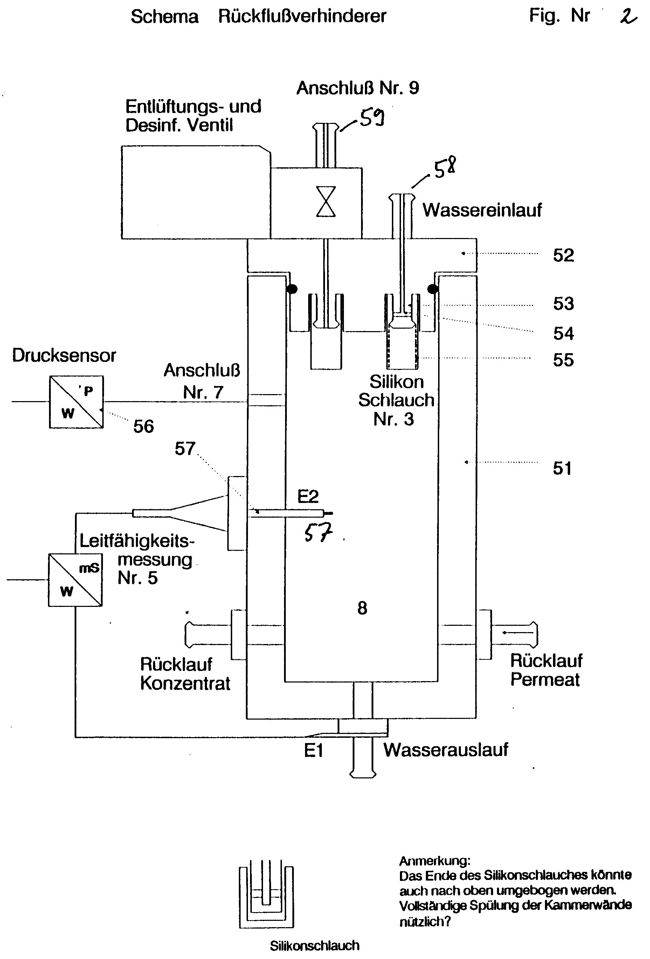

Bei richtiger Anordnung der Leitfähigkeitselektroden E1, E2 (siehe Figur 2) ist die Leitfähigkeitsmeßzelle gleichzeitig neben der Funktion als Leitfähigkeitsmeßinstrument auch als Niveauwächter zu verwenden.

Da nicht auszuschließen ist, daß sich Volumen und Druck in dem Verteilergefäß während Stillstandphasen ändern, kann zur Herstellung eines definierten Anfangsdruckes P1 bzw. Anfangsvolumenes V1 ein Belüftungsventil hinzugenommen werden. Um Verkeimungen und Verblockungen des Membranmoduls während längerer Stillstandszeiten zu verhindern bzw. zu vermindern, kann durch zyklisches Takten des in der Rohwasser-Zuführungsleitung angeordneten Eingangsventils ein Reflesh-Flow ohne Hinzunahme der dem Verteilergefäß nachgeordneten Pumpe erreicht werden.

Das Verteilergefäß kann neben dem Anschluß für die Rohwasserzuführungsleitung einen weiteren, ebenfalls mit einer weiter oben beschriebenen Rückflußsperre versehenen Anschluß aufweisen, mit dem eine gefüllte Desinfektionsspritze verbunden werden kann. Durch Drücken einer Bedienungstaste (Desinfektion/Reinigung) wird das Ventil in der Rohwasser-Zuführungsleitung geschlossen, die dem Verteilergefäß nachgeordnete Pumpe saugt Flüssigkeit aus dem Verteilergefäß ab. Durch den so entstehenden Unterdruck in dem Verteilergefäß kann nun mittels der Spritze auf einfache Weise Desinfektionsmittel eingebracht werden. Das nun ablaufende Reinigungsprogramm, das ebenfalls Bestandteil der vorliegenden Erfindung ist, wird zunächst bei geschlossenen Ventilen der Konzentrat-Abführleitung und Permeat-Entnahmeleitung durchgeführt. Nach einer kurzen Rezirkulationsphase wird das Ventil der Konzentrat-Abführleitung geöffnet und die Anlage so lange gespült, bis die in der Permeat-Entnahmeleitung angeordnete Leitfähigkeitszelle ein einwandfreies Permeat signalisiert. Dann wird das Ventil in der Permeat-Entnahmeleitung wieder geöffnet und die Permeatentnahme somit freigegeben.

Die Desinfektionsmittelzugabe ist auch über ein Zusatzventil in die Konzentrat-Rezirkulationsleitung möglich. Hierzu ist es zweckmäßig, ein Ventil nach der Bauart des Venturi-Prinzips in die Leitung einzubauen. Über ein Desinfektionsmittelventil kann nun für eine vorbestimmte Zeit Desinfektionsmittel aus einem fest angeschlossenen Kanister in den Kreislauf gebracht werden.

Die Erfindung wird nachfolgend in näheren Einzelheiten mit Bezug auf die beigefügten Zeichnungen beschrieben. Dabei zeigen:

Fig. 1    eine schematische Darstellung eines erfindungsgemäßen Umkehrosmosegerätes und

Fig. 2    eine weitgehend schematische Darstellung des erfindungsgemäßen Verteilergefäßes mit Rückflußsperre.

Es wird zunächst auf Fig. 1 Bezug genommen. Hierbei fließt Rohwasser über einen Anschluß 1 zu. Zur Rückhaltung mitgeführter Feststoffe dient ein Feinfilter 2. Ein Druckminderventil 3 begrenzt den Druck des Rohwassers auf einen konstanten Wert. Mit einem Magnetventil 4 wird bei Stillstand des Gerätes der Rohwasserzufluß gesperrt. Die Leitfähigkeitsmeßzelle 5 dient der Messung der elektrischen Leitfähigkeit des Rohwassers. Über ein weiteres Feinfilter 6 gelangt das Rohwasser zu dem Verteilergefäß 8, das gemäß der Erfindung zugleich als Rückflußsperre dient. Aufgabe dieses Teiles ist es unter anderem, den Rückfluß von Flüssigkeit aus dem Gerät in die Rohwasser-Versorgungsleitung unter allen Umständen, einschließlich eventueller Betriebsstörungen, zu verhindern.

Das Verteilergefäß 8 weist außerdem Anschlüsse 20, 21 zur Rückführung von Konzentrat und/oder Permeat auf. Über eine Pumpe 10 wird die Flüssigkeit aus dem Verteilergefäß 8 dem Membranmodul 11 zugeführt. Das Modul enthält die semipermeable Membran 22, die den Innenraum in zwei Teile unterteilt, nämlich einen Primärraum 23, in den von der Pumpe 10 über die Leitung 25 das aufzubereitende Wasser eingeführt wird, und aus dem anderen Ende über eine Leitung 26 das Konzentrat abfließt, und einen Sekundärraum 24, aus dem über eine Leitung 27 das Permeat abgeleitet wird.

Der in dem Primärraum des Membranmoduls herrschende Druck hängt von der Einstellung des Druckhalteventils 16 ab, das in die Konzentratleitung 26 eingefügt ist. Ein Teil des Konzentrats fließt über eine Leitung 28, ein Ventil 17 und einen Anschluß 18 aus dem Gerät ab. Ein anderer Teil des Konzentrats wird über eine Leitung 29, ein Ventil 19 und einen Anschluß 20 in das Verteilergefäß 8 zurückgeführt.

Das über die Leitung 27 aus dem Membranmodul austretende Permeat fließt bei voller Ausnutzung der Geräteleistung nahezu vollständig über ein Ventil 13 und einen Anschluß 14 zum Reinwasserverbraucher. Der restliche Anteil des Permeats gelangt über ein Permeat-Rückflußvetil 15 und einen Anschluß 21 in das Verteilergefäß 8 zurück. Das Permeat-Rückflußventil 15 ist vorzugsweise als Druckhalteventil ausgebildet, so daß damit der in der Leitung 27 herrschende Druck eingestellt werden kann.

In die Permeatleitung ist eine Leitfähigkeitsmeßzelle 12 zur Messung der elektrischen Leitfähigkeit des Permeats eingefügt.

Die Mittels der Leitfähigkeitsmeßzellen 5 und 12 gemessene Leitfähigkeiten stellen ein Maß für die an der jeweiligen Meßstelle herrschende Salzkonzentration dar. Da die von den gelösten Salzen gebildete Ionen wegen ihrer unterschiedlichen Beweglichkeiten in unterschiedlichem Maße zur Leitfähigkeit beitragen, ist diese Zuordnung allerdings nur mit einer gewissen Annäherung richtig.

Um eine selbsttätige Maximierung der Ausbeute zu erreichen, d. h. ein Permeat von gleichbleibender, ausreichend geringer Salzkonzentration mit dem kleinstmöglichen Rohwasserverbrauch zu gewinnen, ist die Leitfähigkeitsmeßzelle 12 mit dem Leitfähigkeitsmesser 32 verbunden, der seinerseits mit der Regeleinrichtung 30 in Verbindung steht. Die Regeleinrichtung 30 verringert bei einem Anstieg der Salzkonzentration im Permeat, entsprechend einem Anstieg der gemessenen Leitfähigkeit, die Öffnungsdauer des Ventils 19 im Verhältnis zur Öffnungsdauer des Ventils 17. Bei einem Absinken der Salzkonzentration im Permeat erfolgt dementsprechend eine entgegengesetzte Veränderung der Öffnungsdauer der beiden Ventile.

Mit Bezug auf Fig. 2 enthält das dort abgebildete Verteilergefäß 8 einen Deckel 52, der das Gefäß luftdicht verschließen kann, mit einem Wassereinlaufanschluß 58 und einem weiteren Anschluß 59 mit einem Entlüftungs- und Desinfektionsventil. Die Rücklaufsperre, die auch für den Anschluß 59 vorgesehen sein kann, besteht aus einem am Ende verschlossenen Rohrstück 53, welches wenigstens eine seitliche Öffnung 54 aufweist. Diese Öffnung ist von einem elastischen Schlauch 55 überdeckt, der über das Rohrstück geschoben ist.

Ein Drucksensor 56 mißt und überwacht den Druck in dem Verteilergefäß und dient außerdem der Funktionskontrolle der Rücklaufsperre, wobei außerdem das in dem Gefäß eingeschlossene Luftvolumen gemessen werden kann.

Für das Luftvolumen V in dem allseitig geschlossenen Gefäß bei einem Druck p gilt die Beziehung V = dV x p/dp. Der Druck p und die Druckänderung dp sind mittels des Drucksensors erfaßbar, während die Volumenänderung dV durch Zufuhr/Entzug eines abgemessenen Flüssigkeitsvolumenens definiert werden kann.

Die Leitfähigkeitselektroden E1, E2 der Leitfähigkeitsmeßzelle werden neben ihrer Funktion als Leitfähigkeitsmeßinstrument auch als Niveauwächter verwendet.

Der auf das Rohrstück 53 aufgeschobene Silikonschlauch 55 kann einen geschlossenen oder auch offenen Bodenbereich haben. Im Falle eines offenen Bodenbereichs entspricht der Rückflußverhinderer in seinem Aufbau im wesentlichen einem Fahrradventil.

Es folgt eine Zusammenstellung der Ableitungen und Formeln, die im Zusammenhang mit der vorliegenden Erfindung von Bedeutung sind.

Ableitung/Formelsammlung

Zu- und Abflüsse, Durchflüsse (Volumen pro Zeiteinheit):

Qr = Rohwasserzufluß  
Qk = Gesamt-Konzentratfluß  
Qka = Konzentrat-Abfluß  
Qkr = Konzentrat-Rezirkulationsfluß  
Qp = Gesamt-Permeatfluß  
Qpa = Permeat-Abfluß  
Qpr = Permeat-Rezirkulationsfluß  
Qv = Zufluß vom Verteilergefäß zum Modul = Qr + Qkr + Qpr

Konzentrationen:

Cr      = Konzentration im Rohwasser
Cv      = Konzentration im Verteilergefäß 8
Ck      = Konzentration im Konzentrat
C1      = mittlere Konzentration auf der Konzentratseite der Membran

C1  =  (Cv  +  Ck)/2

Cp      = Konzentrat im Permeat

Leistungsgrößen:

Am      = Ausbeute des Moduls  =  Qp/(Qr + Qkr + Qpr)  =  Qp/Qv
Ag      = Ausbeute des gesamten Gerätes  =  Qpa/Qr  =  (Qp-Qpr)/Qr
E'      = Rückhaltekoeffizient des Moduls  =  C1/(C1  +  Cp)

Bilanz des Moduls:

a) Bilanz der gelösten Substanzen

Qv*Cv  =  Qk*Ck  +  Qp*Cp       (1)

b) Mengenbilanz

Qv  =  Qk  +  Qp       (1a)

Mittl. Konzentration auf der Konzentratseite (Definition):

C1  =  (Cv  +  Ck)/2       (2)

Rückhaltekoeffizient der Membran (Definition):

E  =  C1/(C1  +  Cp)  =  1/(1 + Cp/C1)       (3)

Aus (3) folgt

Cp  =  C1 * (1-E)/E       (4)

Aus (2) und (4) folgt (Elimination von C1):

Cp  =  (Cv  +  Ck) * (1-E)/2E       (5)

Cv  =  2E*Cp/(1-E) - Ck       (5a)

Ck  =  2E*Cp/(1-E) - Cv       (5b)

9

Ausbeute des Moduls (s.oben):

$$Am = Qp/Qv \quad ---> \quad Qp = Am * Qv \qquad (6)$$

$$Qk = (1-Am) * Qv \qquad (6a)$$

Aus (1), (5,5a,5b) und (6,6a) folgt:

Cp = Cv * (2-Am)*(1-E)/(2E-3EAm+Am)    (7)

Ck = Cv * [2E-Am*(1-E)]/(2E-3EAm+Am)     (7a)

und

Cp/Ck = (2-Am)/[2E/(1-E) - Am]     (7b)

Wirkung von Permeat- und Konzentratrückführung auf die Konzentration Cv am Moduleingang:

a) gelöste Substanzen

Qv*Cv = Qr*Cr + Qpr*Cp + Qkr*Ck     (8)

b) Mengenbilanz

Qv = Qr + Qpr + Qkr     (8a)

Rückführungskoeffizienten ("prozentuale Rückführung"), Definition:

Permeat:

Rp = Qpr/Qp     (9a)

Konzentrat:

Rk = Qkr/Qk     (9b)

Ausbeute des gesamten Gerätes (s.oben):

Ag = Qpa/Qr = (Qp-Qpr)/Qr     (10)

Einstellbare Ausbeute des gesamten Gerätes (Ag var)

Ag var = Qpa/Qpa+(Qka*tka/tges)

Erläuterung:
Qr        = Qpa+Qka
tka       = Offenzeit von Ventil 17
tges      = Periodenzeit von Ventil 17, 19

Aus (8, 8a) folgt:

Cv = (Qr*Cr + Qpr*Cp + Qkr*Ck)/(Qr + Qpr + Qkr)     (11)

**Patentansprüche**

1. Verfahren zur Aufbereitung von Flüssigkeiten nach dem Prinzip der umgekehrten Osmose, insbesondere zur Gewinnung von im wesentlichen reinem Wasser aus Leitungswasser, mittels einer ein Membranmodul aufweisenden Vorrichtung,
**dadurch gekennzeichnet,**
daß die Salzkonzentration des aus dem Membranmodul austretenden Permeats und/oder des zugeführten Rohwassers und/oder der Flüssigkeit in einem dem Membranmodul vorgeschalteten Verteilerbehälter gemessen und der rezirkulierte Anteil des Konzentrats und/oder des Permeats dem Meßergebnis entsprechend eingestellt wird.

2. Verfahren nach Anspruch 1,
dadurch gekennzeichnet, daß der rezirkulierte Konzentratanteil und/oder Permeatanteil durch Messung der Salzkonzentration auf einen modulschonenden Wert eingestellt wird.

3. Verfahren nach Anspruch 1 oder 2,
dadurch gekennzeichnet, daß der rezirkulierte Konzentratanteil und/oder Permeatanteil so eingestellt wird, daß ein vorgegebener Permeat-Grenzwert nicht überschritten oder eingehalten wird.

4. Verfahren nach einem der Ansprüche 1 bis 3,
dadurch gekennzeichnet, daß zur Verbesserung des Abbaus des Biofilms und der hochkonzentrierten Grenzschicht intervallweise jeweils der gesamte Konzentratfluß und/oder der gesamte Permeatfluß rezirkuliert oder verworfen wird.

5. Verfahren nach einem der Ansprüche 1 bis 4,
dadurch gekennzeichnet, daß durch Druckmessung die benötigte Permeatmenge erfaßt, vorzugsweise mittels Ventilschaltungszeiten die Ausbeute ermittelt und auf einen niedrigen Wasserverbrauch und/oder modulschonenden Wert eingestellt wird.

6. Vorrichtung zur Aufbereitung von Flüssigkeiten nach dem Prinzip der umgekehrten Osmose, insbesondere zur Gewinnung von im wesentlichen reinem Wasser aus Leitungswasser, mit einer Zulaufleitung, in der ein Verteilergefäß und eine Pumpe angeordnet sind und die zu einem Membranmodul führt, in der eine semipermeable Membran einen das Permeat enthaltenden Primärraum von einem das Konzentrat enthaltenden Sekundärraum trennt, ferner mit einer Konzentrat-Abführleitung, einer zu dem Verteilergefäß zurückführenden Konzentrat-Rezirkulationsleitung, einer Permeat-Entnahmeleitungund einer zu dem Verteilergefäß zurückführenden Permeat-Rezirkulationsleitung,
dadurch gekennzeichnet, daß in der Konzentrat-Abführleitung (28) und der Konzentrat-Rezirkulationsleitung (29) gegenläufig betätigbare Ventile (17, 19) angeordnet sind.

7. Vorrichtung nach Anspruch 6,
dadurch gekennzeichnet, daß auch in der Permeat-Entnahmeleitung und der Permeat-Rezirkulationsleitung (21) gegenläufig betätigbare Ventile, vorzugsweise elektromagnetische Ventile (13, 34) angeordnet sind.

8. Vorrichtung nach Anspruch 6 oder 7,
dadurch gekennzeichnet, daß die Öffnungszeiten der Ventile (17, 19, 13, 34) in Abhängigkeit vom Permeatdruck und/oder der Leitfähigkeit automatisch so eingestellt werden, daß der gesamte Konzentratfluß bzw. Permeatfluß rezirkuliert oder abgeführt wird.

9. Vorrichtung nach einem der Ansprüche 6 bis 8,
dadurch gekennzeichnet, daß der Einstellbereich der Ventile (17, 19) elektronisch oder mechanisch begrenzt ist und daß eine Anzeige (31) eine dem jeweils eingestellten Verhältnis der Ventilöffnungszeiten entsprechende Angabe, vorzugsweise Ausbeute oder Wirkungsgrad anzeigt.

10. Vorrichtung nach einem der Ansprüche 6 bis 9,
dadurch gekennzeichnet, daß die Ventile (17, 19; 13, 34) ersetzt werden durch
a) ein fernsteuerbares kontinuierlich (analog) die Konzentrat-Rezirkulation veränderndes Ventil, vorzugsweise motorisch angetriebenes Ventil mit zwei gegenläufig veränderlichen Strömungswiderständen,

b) einen justierbaren Strömungswiderstand plus ein getacktetes Ventil

c) einen justierbaren Strömungswiderstand plus ein fernsteuerbares kontinuierlich verstellbares Ventil.

11. Vorrichtung nach einem der Ansprüche 6 bis 10,
dadurch gekennzeichnet, daß das Verteilergefäß (8) eine Einrichtung (53, 54, 55) zur Verhinderung eines Rückflusses zur Frischwasserseite aufweist, die ein mit der Frischwasserzulaufleitung verbundenes Gehäuse (53) mit wenigstens einer Öffnung (54) ist, die von einer elastischen Abdeckung, vorzugsweise einem Silikonschlauch (55) überdeckt ist.

Schema Osmose

Fig. Nr 1

1. Wassereingangsanschluß
2. Eingangssieb 50
3. Druckminder Wassereingang
4. Wassereingangsventil
5. LF-Zelle Rohwasser
6. Feinsieb 5
7. Druckschalter
8. Rückflußverhinderer
9. Desinfektionsanschluß und Entlüftung
10. Förderpumpe mit Wärmetauscher
11. Modul
12. LF-Zelle Permeat
13. Permeatventil
14. Permeatanschluß
15. Rückflußventil Permeat
16. Druckhaltedrossel Konzentrat
17. Konzentratventil Ka
19. Konzentratrückflußventil
20. Rezirkulationsanschluß
21. Permeatanschluß
22. Membrane
23. Modulprimärraum
24. Modulsekundärraum
25. Druckleitung
26. Konzentratausgangsleitung
27. Permeatausgangsleitung
28. Konzentratabflußleitung
29. Konzentratrezirkulationsleitung
30. Steuerungseinrichtung
31. Anzeige (multifunktional)
32. Leitfähigkeitsmesseinrichtung
33a. Drucksensor  Permeatmengenregelung
33b. Drucksensor
34. Permeatrezirkulationsmagnetventil

Schema   Rückflußverhinderer      Fig. Nr   2

Anschluß Nr. 9

Entlüftungs- und
Desinf. Ventil                    59

                                   58

                          Wassereinlauf

                                           52

                                           53
                                           54

Drucksensor      Anschluß                  55
                 Nr. 7
                          Silikon
    P                     Schlauch
                          Nr. 3
    W
         56                                51

    57

                   E2
                   57

Leitfähigkeitsmessung
mS  Nr. 5

    W
                   8

Rücklauf                      Rücklauf
Konzentrat                    Permeat

         E1   Wasserauslauf

Anmerkung:
Das Ende des Silikonschlauches könnte
auch nach oben umgebogen werden.
Vollständige Spülung der Kammerwände
nützlich?

Silikonschlauch

14